# EUROPEAN PATENT APPLICATION

(11) **EP 0 705 750 A1**
(43) Date of publication of application: **10.04.1996**
(21) Application number: 94918578.9
(22) Date of filing: 27.06.1994
(51) Int. Cl.: B61D 17/00, B23K 9/00

(54) **METHOD FOR MANUFACTURING VEHICLE STRUCTURAL BODIES**

(30) Priority: 29.06.1993 JP 158549/93
(71) Applicant: HITACHI, LTD., Chiyoda-ku, Tokyo 100 (JP)
(72) Inventor: OSUMI, Naotake, Yamaguchi 744 (JP); INOUE, Masafumi, Yamaguchi 744 (JP)
(74) Representative: Paget, Hugh Charles Edward
(86) International application number: JP9401031
(87) International publication number: WO9501273

(57) **Abstract**

A method for manufacturing vehicle structural bodies in which highly reliable vehicle structural bodies can be manufactured using laminated panels. The method comprises the steps of positioning a plurality of honeycomb panels relative to each other so as to hold them together for weld joining, and confirming joint conditions between materials constituting honeycomb panels by inspecting the weld joint portions and the vicinity of welding lines using non-destructive inspection methods such as radiation, ultrasonic, impact and hammering inspection methods.

## Description

### TECHNICAL FIELD

The present invention relates to a method for manufacturing vehicle structural bodies, especially to method for manufacturing vehicle structural body preferably applicable to a vehicle structural body using laminated panels by soldering and jointing structural elements as materials forming the vehicle structural body.

### PRIOR ART

In the prior art, a railroad vehicle structural body is typically composed of a six-face polyhedron having a root part, a side panel, a under frame and a end panel, each connected to one another by welding joints. As for materials used for composing the structural body, often used are rolled steel plates, rolled or pressed aluminum alloy plates, and the reliability of those materials is established with their field-use experiences.

In recent years, in order to increase the running speed of railroad vehicles, it is required to make the weight of vehicle structural body lighter, and thus, a vehicle structural body using soldered aluminum honeycomb panels as main members of the vehicle structural body has been developed. An example of fabricating technology related to this matter is shown in Japanese Laid-Open Patent No. 90468 (1991).

In case of using soldered aluminum honeycomb panels as elemental members of the vehicle structural body, these panels are jointed by welding, in which there may be bad effect caused on the soldered part between elemental members forming the panel because of distortion of materials due to thermal erosion in the soldering process. It is important to consider this bad effect as well as the structural defect of the welding metal part in order to establish the integrity of the welding process.

In fabricating a vehicle structural body, welding process for forming small-sized blocks composed of soldered aluminum honeycomb panels is followed by welding process for forming larger-size blocks by jointing small-sized blocks together, and finally, a single body of vehicle shaped in a six-face polyhedron is built up by jointing six larger-size blocks including, roof block, side wall block, under frame block and end plate block. In this method of fabrication, as specific assembly, restriction and welding procedures adequate for the individual steps of fabrication are performed, it is required to inspect properly the changes in the integrity of fabricated members caused by the thermal effect on the soldered aluminum honeycomb panels and their distortion behavior in responsive to the status of individual welding processes. In the structural body fabricated with rolled or pressed materials as in the prior art, the strength reliability of the resultant structural body is attempted to be established by making larger the thickness of the joint part between adjacent members, and by combining the plate member and the beam member. Those conventional methods is aimed to increase the structural strength of fabricated members, and lead to cause the obstacle in making lighter the weight of fabricated members and resultant body.

### DISCLOSURE OF THE INVENTION

An object of the present invention is to provide a method for fabricating a vehicle structural body enabling to manufacture a vehicle structural body composed of laminated panels with higher reliability.

In a method of fabricating vehicle structural body in which a plurality of laminated panels, each formed by joint materials by soldering, are jointed together by welding, the above object is attained by combining a step for jointing by welding a plurality of laminated panels, and a step for inspecting a material jointing status in the individual laminated panel by non-destructive inspection of the welding part and its neighboring area of the laminated panel after completing the step for jointing by welding.

By working with adequate repair when any structural defect due to thermal effect on the welding joint part is found, by inspecting the welding part and its neighboring area of the laminated panel by non-destructive inspection, and by identifying the joint status between adjacent materials at the soldering part between materials and the welding joint part between materials of the laminated panel itself, it will be appreciated that higher reliability of the resultant vehicle structural body can be established.

### BRIEF DESCRIPTION OF THE DRAWINGS

FIG. 1 is one embodiment of the outline of the fabrication process in the fabrication method of the vehicle structural body in the present invention.

FIG. 2 shows a radiation inspection method used in fabricating the vehicle structural body in FIG. 1.

FIG. 3 shows a ultrasonic inspection method used in fabricating the vehicle structural body in FIG. 1.

FIG. 4 shows an impact inspection method and a hammering inspection method, both used in fabricating the vehicle structural body in FIG. 1.

FIG. 5 shows a vacuum method used in fabricating the vehicle structural body in FIG. 1

Fig. 6 shows an apparatus used for UT, impact inspection and hammering inspection.

Fig. 7 shows another embodiment of the method for inspecting the welding part and its neighboring area.

### BEST FORM FOR WORKING THE INVENTION

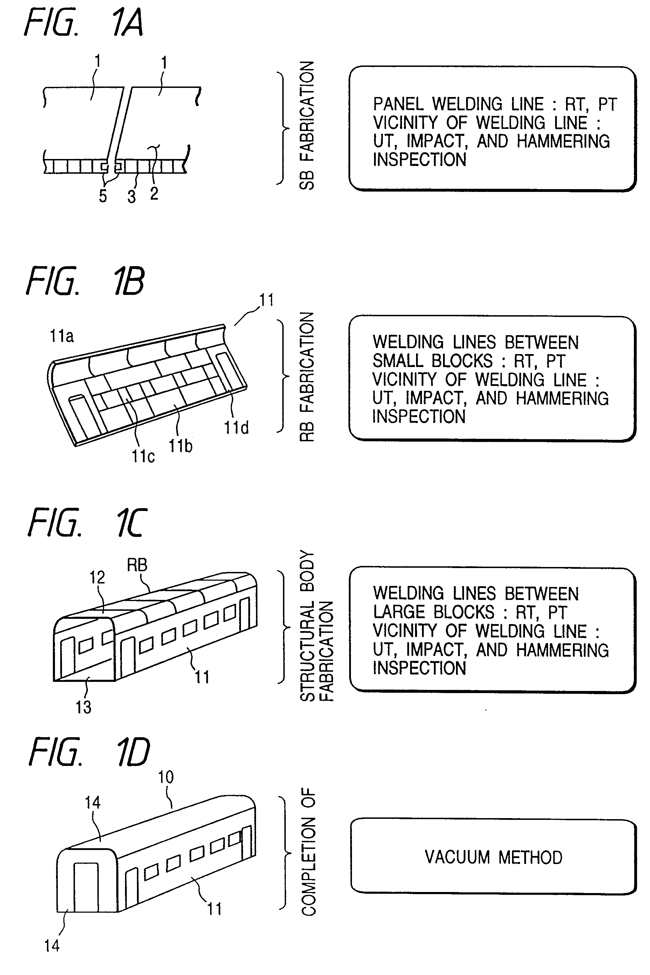

By referring to figures, an embodiment of the present invention is described. FIG. 1 shows fundamental fabrication steps of the vehicle structural body, and an inspection status in the individual steps. In FIG. 1, component 1 is soldered aluminum honeycomb panel (designated simply "honeycomb panel" hereafter) supplied as a fundamental material comprising the vehicle structural body 10. The honeycomb panel 1 is composed of a couple of face panels 2 and 3, core materials 4 inserted between the face panels, strength members not shown, and a joint member 5. The core material 4 formed in a honeycomb shape between the face panels 2 and 3, the strength member shaped in a simple plate or a pressed member used as a support member, and the joint member 5 placed on the outer edge of the panel supplied as to confirm the strength of the joint part are assembled together to be formed as the honeycomb panel 1 by soldering process. The honeycomb panel 1 is made to be shaped in a curved surface to fit the shape of the vehicle structural body 10 when the panel is prepared in manufacturing itself.

As for the honeycomb panel 1 so manufactured as in the above manner, joint conditions between the face plates 2, 3 and the core member 4 and the strength member, joint conditions between the face panels 2, 3 and the joint member 5 are inspected. The joint conditions between the face plates 2, 3 and the core member 4 and the strength member are inspected by impact inspection, hammering inspection and ultrasonic wave inspection. A preferable criteria for this inspection is that the strength of joint part is equivalent to or more than that of the body member material, for example, in case that all the materials used for those members are aluminum alloy, and the thickness of the face plate 2, 3 is 1 mm, the thickness of the core member is 0.4 mm. As for the joint part between the face panels 2, 3 and the joint member 5, the inspection is performed by ultrasonic test, radiation test or penetration test, and its preferable criteria is that the number of observed defects is under a reference value and is closer almost to zero in case that the thickness of the joint member 5 is 2 mm.

As shown in FIG. 1 (1), a couple of adjacent honeycomb panels 1 with individual joint members 5 inserted between panels are welded together as their positions are fixed properly, and thus, a small-sized block SB with a designated area size is obtained. As for the inspection of the small-sized block SB, the welding lines between panels are inspected by RT or PT, and the neighboring areas of the welding lines are inspected by UT, impact method, or hammering method. In the inspection of the welding lines between the panels, what is confirmed is whether the panel members, that is, face panels 2, 3 and joint members 5, are jointed firmly without material defects between the adjacent honeycomb panels. In the inspection of the neighboring areas of the welding lines, the thermal effect by the welding process on the soldering parts between the face panels 2, 3 and the joint members 5 on the honeycomb panel 1 are examined. In addition, the thermal effect by the welding process on the soldering parts between the face panels 2, 3 and the core member 4 are also examined. In case that any defect is found in those inspection work, repair works and/or rejection of assembled members are determined by judging the scale and the extent of the found defect.

The small-sized blocks SB are used for forming a panel composed of a series of blocks in the longitudinal direction of the vehicle, or for forming blocks as decomposed parts of the side part or the roof part of the vehicle.

In inspecting the small-sized blocks SB, as the size of the inspected objects is relatively small and hence, the material handling and transportation process for them is made to be easier, the inspection can be performed automatically in a short period of time and with higher accuracy by using a large-scale high precision inspection machine.

By arranging a plurality of small-sized blocks SB, large-sized blocks RB, including side-wall block 11, roof block 12, underframe block 13 and end-panel block 14, are fabricated. FIG. 1 (2) shows a fabrication of side-wall block 11 as an example of large-sized blocks RB. The small-sized blocks SB used as blocks for the window heads 11a and the wainscot panels 11b extending in the longitudinal direction of the vehicle are fabricated, and by adding pier panels 11c and entrance doors 11d to those small-sized blocks SB, all of those blocks and members are fixed in their proper positions. Now that their positions are established, the small-sized blocks SB and the individual members are jointed by welding. The inspection of the side-wall block 11 so manufactured as described above is performed by RT or PT on the welding lines between the small-sized block SB themselves and between the small-sized blocks and the individual members. As for the inspection of the neighboring areas of the welding lines, UT, impact method, or hammering method is applied. The inspected objects in this case include welding parts between individual small-sized blocks SB and their welding line is long and the necessary heat for welding process is larger, and therefore, the allowable error in the assembly accuracy for the joint parts between the welded blocks should be made to be larger than that in the case of welding members for forming a small-sized block SB, and hence, much attention should be paid for the inspection work.

In inspecting the large-sized blocks RB, it is advantageous in view of performance of the inspection work to perform an automated inspection work with a movable inspection apparatus attached to the tools for welding the joint parts on the side-wall block 11 which can be moved in the longitudinal direction of the side-wall block 11.

As shown in FIG. 1 (3), the large-sized blocks RB including the side-wall block 11, the roof block 12, the underframe block 13 and the end-plate block 14, are combined and their proper positions are fixed, and thus, the structural body 10 is formed by welding those blocks. In assembling the structural body, by finishing the final assembly with a couple of end-plate blocks 14, the inspection apparatus and its supplementary devices can be transport in and out through the open-end part of the structural body under assembly, which leads to an advantageous aspect in increasing the efficiency of the assembly works.

The inspection of the welding lines between the large-sized blocks RB is performed by RT or PT, and the inspection of the neighboring areas of the welding lines is performed by UT, impact method or hammering method. As the welding conditions for the large-scale blocks are more serious and severe than those for the small-sized blocks, much attention must be paid for the inspection works.

So far, as shown in FIG. 1 (4), the manufacturing of the structural body 10 is finished, and to which an airtightness inspection is performed. This inspection for airtightness characteristic of the structural body is performed by vacuum method.

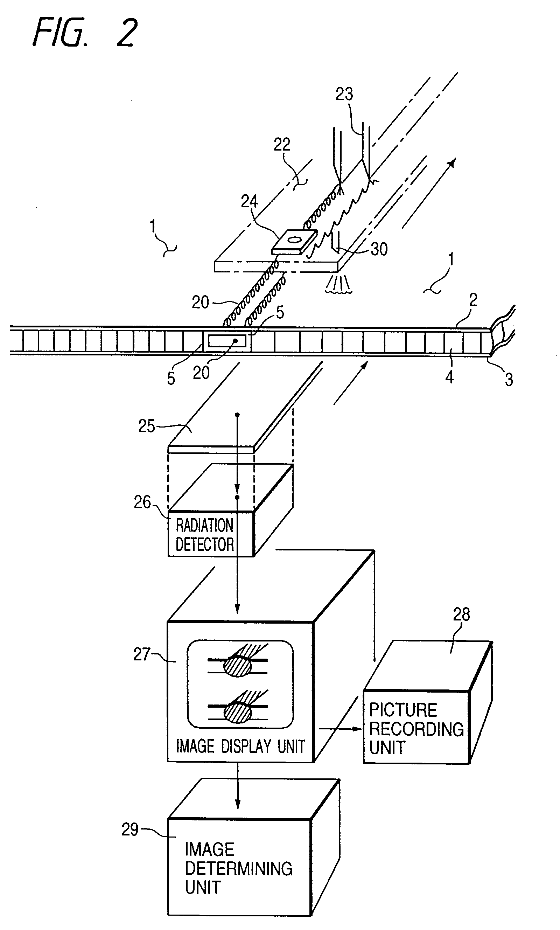

Now, the individual inspection methods, RT, UT, impact inspection, hammering inspection, and vacuum method, performed at the designated steps in the assembly works are described below. By referring to FIG. 2, RT will be described in detail. In FIG. 2, the honeycomb panel 1 forming a small-sized block is welded by the automatic welding equipment 23. The radioactive ray source 24 is mounted inside the self-running welding equipment 22, a component of the automatic welding equipment 23, and a radiation detector 26 is mounted in the lower self-running equipment 25 moving in synchronize with the self-running welding equipment 22. The inside status of the welding line is visualized on the image display unit 27, with which the radioactive ray emitted by the radioactive ray source 2 penetrates through the welding line 20 and the signal detected by the radioation detector 26 in the lower self-running equipment 25 is digitized for visualization. The visualized image can be examined by human sight as well as judged automatically by the image determining unit 29 with computer apparatus. If defect parts are found, those parts are recorded on the image recording unit 28, and are marked the defect part marking equipment 30 for improving the efficiency of the repair works.

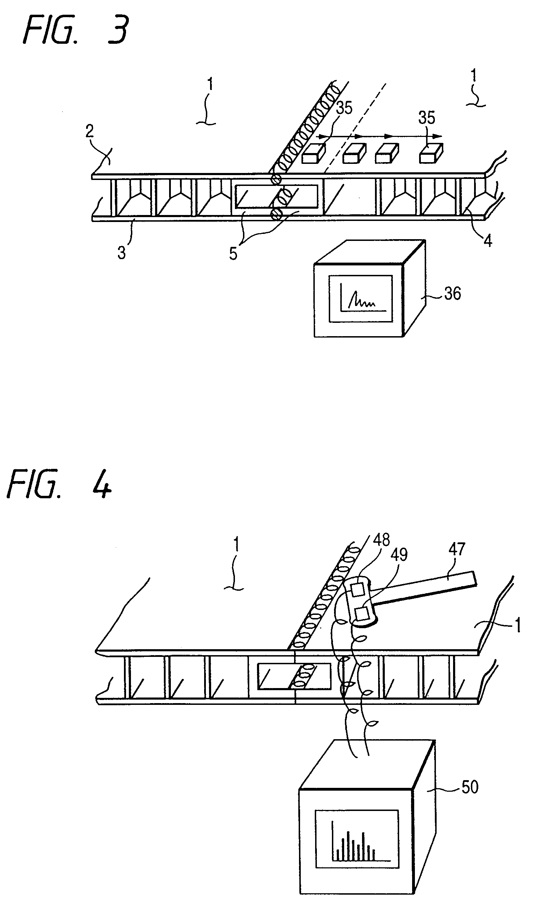

Next, by referring to FIG. 3, UT is described in detail. In FIG. 3, the soldered part between the face plate 2, 3 and the joint part member 5 or the soldered part between the face plate 2, 3 and the strength member is subject to the heat effect caused by the soldering process and, there may be material defects there. When inspecting those joint parts, the probe is made to be moved along the line defined by the welded joint part and its neighboring area of the individual member. By emitting the ultrasonic wave to the target part and observing the reflected wave with the ultrasonic test apparatus 36, the material defects such as exfoliation at the soldered part between a couple of members with distinctive material components.

Next, by referring to FIG. 4, impact inspection method and hammering inspection method are described in detail. As the material defect such as exfoliation at the soldered part on the honeycomb panel 1 results in the change in the characteristic frequency, the inspection of the acoustic or vibration property of the material can report indirectly the material defect. In FIG. 4, the target part for inspection in the neighboring area of the welding line on the honeycomb panel 1 is struck by the hammer 47 having a vibration sensor 48 and an impact sensor inside, and the repulsive force is measured and compared with the data for the non-defective part by assuming that the impact force is constant, and thus, the comparison result is displayed on the display apparatus 50. In addition, the vibration frequency is measured and analyzed in comparison with the data for the non-defective part, and thus, the material defect can be detected. In case for the comprehensive and overall inspection, it may be allowed to make it easier and faster to inspect the target part by means that the acoustic response is amplified and put out from speakers so that the inspection operator can recognize it physically.

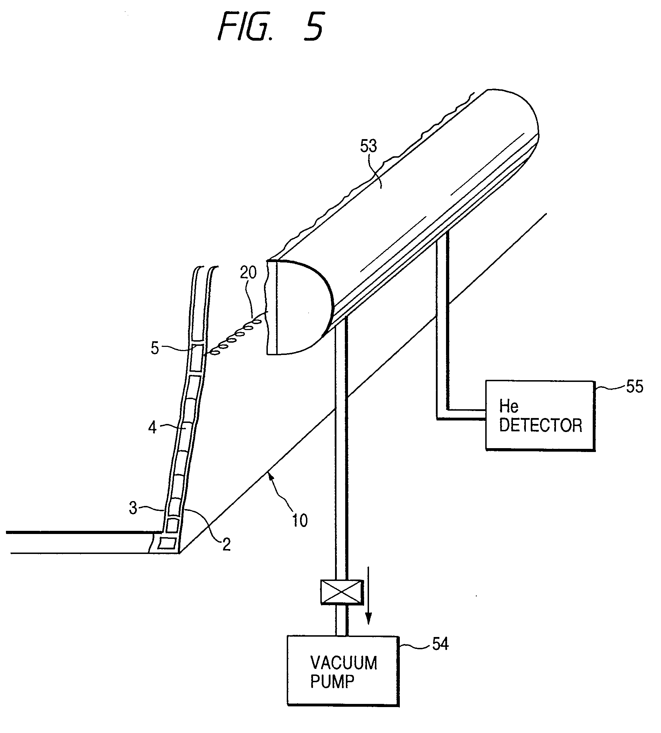

Finally, by referring to FIG. 5, vacuum inspection method for testing the airtightness of the finished structural body is described. The rolling stocks running in high speed are required to have enough mechanical strength to support itself under pressure waves when running in tunnels as well as to have enough airtightness. The welding line 20 of the structural body 10 so composed by welding honeycomb panels is made to be covered by the vacuum chamber 53 having a designated length and separated from the atmospheric outside environment. The inside air of the vacuum chamber is extracted by the vacuum pump 54 and the inside pressure is reduced to be as low as possible. A mixed gas composed of air and helium is filled in the honeycomb panel 1 through the small penetration hole on the core member 4. By observing the helium gas density in the vacuum chamber 53 by the helium gas detector 55, the existence of material defects can be examined. In order to identify the location of the defective part, forming material is coated on the surface of the welding line 20, and the position of bubbles emerged on the surface can tell the location of the defective part. This airtightness inspection is directed mainly to the inspection of the joint part between the large-sized blocks, but large-sized blocks or small-sized block themselves are inspected by this airtightness inspection, which enables the increase in the inspection efficiency by reducing the number of welding parts required to be inspected after completion of the structural body.

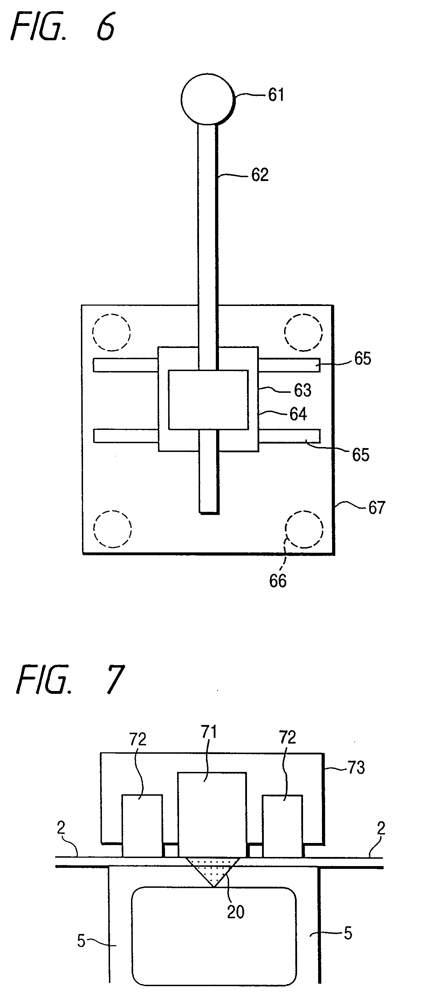

Fig. 6 shows an apparatus used for UT, impact inspection and hammering inspection.

This equipment is comprised of a detector 61 used for the UT, the impact inspection or the hammering inspection, a support member 62 for supporting the detector 61, an expansion equipment 63 for moving the support member 62 in its axial direction, a travelling equipment 64 for moving the expansion equipment 63 in a direction perpendicular to the axial direction, guide rails 65 for supporting and guiding the travelling equipment 64, and a frame 67 having a plurality of suction means 66, for supporting the guide rails 65. The suction means 66 is connected to a vacuum pump. It is, therefore, possible to attach the frame to an object to be inspected. For example, the detector 61 is attached to a structural body by using the suction means and is moved along a surface to be inspected by the expansion equipment 63 and the travelling equipment 64. Thereby, the object can be inspected in a predetermined interval. According to this apparatus, any predetermined positions can be inspected, regardless of the shape of the surface of the object to be inspected.

Fig. 7 shows another embodiment of the method for inspecting the welding part and its neighboring area. An apparatus for performing the method is an ultrasonic inspecting apparatus and is comprised of a skew angle ultrasonic probe 71 for inspecting the welding part 20, vertical ultrasonic probes 72 for inspecting the soldered part at the neighborhood of the welding part 20 and a frame 73 for mounting them. The vertical ultrasonic probes 72 is mounted on both sides of the skew angle ultrasonic probe 71. The vertical ultrasonic probes 72 is used for inspecting the face plate 2, the joint member 5 and the soldered part, at the neighborhood of the welding part 20. According to this apparatus, the welding part and its neighborhood can be inspected easily at a time.

There is such an inspection method other than the inspection methods described above that, specifically for inspecting a single honeycomb panel 1, by supplying compressed air to the inside chamber of the honeycomb panel through the hole on the core member of the panel and by projecting striped patterns on the surface of the panel, the changes in the projected patterns on the deformed surface of the panel due to swelling reports an exfoliation of the material of the panel. As for the inspection method for the welding parts, the following method is possible. In jointing a couple of adjacent honeycomb panels, a continuous chamber space is formed with the joint member inserted between them. The material defect at the welding part can be inspected by detecting the leaked component of air or specific gases supplied and contained in this continuous chamber space with its both ends being plugged, in which the detection of the leaked gas can be performed by some mechanical way or by using forming materials.

According to the present invention as described above, as the material defect can be detected by inspecting efficiently the welding parts and their neighboring areas, highly reliable structural bodies suitable for high-speed rolling stocks can be fabricated.

## Claims

1. A fabrication method of a vehicle structural body formed by jointing a plurality of laminated panels, each panel jointed together by soldering a elementary material, by soldering, comprising the steps of:
jointing said plurality of laminated panels by soldering; and
inspecting a joint status of said elementary material of said laminated panel by non-destructive inspection of a soldering part of said laminated panel after completing said soldering jointing step and a neighboring area of said welding part.

2. A fabrication method of a vehicle structural body formed by jointing a plurality of laminated panels, each panel jointed together by soldering a elementary material, by soldering, comprising the steps of:
fabricating a small-sized block by jointing said plurality of laminated panels by welding and for inspecting a welding part of said small-sized block and a neighboring area of said welding part;
fabricating a large-sized block by jointing said small-sized blocks by welding and for inspecting said large-sized block; and
fabricating a structural body by jointing said large-sized blocks by welding and for inspecting said structural body.

3. A fabriction method of a vehicle structural body made by laminated panels, comprising the steps of:
positioning and holding a plurality of panels relative to each other, and welding and jointing the panels, and
confirming joint conditions between materials constituting the panels by inspecting the weld joint portions and the vicinity of welding lines using rediation, ultrasonic, impact and hammering inspection methods
